# EUROPEAN PATENT SPECIFICATION

(11) **EP 1 828 598 B1**
(45) Date of publication and mention of the grant of the patent: **10.06.2009**
(21) Application number: 05813604.5
(22) Date of filing: 23.11.2005
(51) Int. Cl.: F03D 7/06, F03D 3/06, F03D 3/00

(54) **VERTICAL AXIS TURBINE**
TURBINE MIT VERTIKALER ACHSE
TURBINE A AXE VERTICAL

(30) Priority: 24.11.2004 GB 0425827
(43) Date of publication of application: 05.09.2007
(73) Proprietor: Luethi, Matthew, Rochester, Kent ME2 3XA (GB)
(72) Inventor: Luethi, Matthew, Rochester, Kent ME2 3XA (GB)
(74) Representative: Brookes Batchellor LLP
(86) International application number: PCT/GB2005/050212
(87) International publication number: WO 2006/056813

(56) References cited:
- DE-A1- 10 318 162
- US-A- 1 825 500
- US-A- 4 087 202
- US-A- 4 545 729
- US-A- 5 425 619
- PATENT ABSTRACTS OF JAPAN vol. 008, no. 249 (M-338), 15 November 1984 (1984-11-15) -& JP 59 126084 A (TADAO TOTSUKA), 20 July 1984 (1984-07-20)

## Description

The present invention relates to a turbine with a vertical axis of rotation and particularly to a wind powered turbine with a built in speed regulator.

Wind-powered turbines conventionally comprise a plurality of sails or blades placed radially around a shaft. The sails or blades are appropriately shaped and positioned relative to an air flow so that, in operation, the force produced by the air flow impacting the turbine causes the shaft to rotate. Historically, this rotational movement was used to grind corn or pump water but it is now commonly used to generate electricity.

Wind powered turbines with a vertical axis provide certain advantages over wind powered turbines with a horizontal axis of rotation. For example, the blades extend horizontally, reducing the need for the rotor to be placed on a tall tower above the ground; the weight of shaft and blades can be evenly applied to the bearings supporting the shaft preventing excess wear at the bottom of horizontal bearings; and in certain embodiments, operation can be independent of the wind direction.

However, as with all wind powered turbines, there is a danger that in high winds the turbine blades may be damaged. Furthermore, it is advantageous for the shaft of a wind powered turbine to rotate at a substantially constant speed, as far as possible, regardless of the strength of the wind. Accordingly, it is an aim of the present invention to provide a mechanism whereby the blades of a wind powered turbine are protected from high winds and further to assist in maintaining the rotation of the turbine shaft at a substantially constant speed, regardless of the strength of the wind.

US 4,545,729 discloses a vertical axis turbine. In one embodiment, considered to be the closest prior art, it discloses the features of the pre-amble of claim 1. A weight is lifted up a central column by pulley cables attached to flyball weights.

US 1,825,500 discloses a vertical axis turbine comprising a plurality of vanes arranged about a substantially vertical central axis such that they can rotate together about the central axis, each vane having an outer edge and an inner edge and being pivotally mounted about an axis substantially parallel to the central axis; a sleeve positioned substantially on the central axis and axially movable with respect thereto and connected with each vane. Each vane is connected to the collar by a link. The sleeve is lifted along the central axis by a governor above the turbine.

JP 59 126084 A discloses a self regulating windmill comprising: a plurality of wings arranged about a substantially vertical central axis such that they can rotate together about the central axis, each wing having an outer edge and an inner edge and being pivotally mounted near the outer edge about an axis substantially parallel to the central axis; and biasing means which biases the inner edge of each wing towards the central axis, wherein: when the wings are placed in a fluid flow they rotate together about the central axis and, as their speed of rotation increases, they pivot about their mountings against the bias of the biasing means and into a more circumferential orientation about the central axis; and the biasing means comprises a spring.

US 5,425,619 discloses a self governing fluid energy turbine with a radial flow rotor comprising a plurality of blades arranged around a substantially horizontal central axis such that they can rotate together about the central axis, each blade having an outer edge and an inner edge and being pivotally mounted about an axis substantially parallel to the central axis; biasing means which biases the blades in a substantially circumferential orientation, wherein when the blades are placed in a fluid flow they rotate together about the central axis and, as their speed of rotation increases, they pivot about their mountings against the bias of the biasing means and into a more radial orientation; and the biasing means comprises a spring.

Accordingly, the present invention provides a turbine comprising: a plurality of turbine blades arranged about a substantially vertical central axis such that they can rotate together about the central axis, each turbine blade having a outer edge and an inner edge and being pivotally mounted near the outer edge about an axis substantially parallel to the central axis; and biasing means which biases the inner edge of each turbine blade towards the central axis, wherein: when the turbine blades are placed in a fluid flow they rotate together about the central axis and, as their speed of rotation increases, they pivot about their mountings against the bias of the biasing means and into a more circumferential orientation about the central axis; and the biasing means further comprises: a mass positioned substantially on the central axis and axially movable with respect thereto and connected with each turbine blade near its inner edge wherein, the turbine is adapted so that an increase in the speed of rotation of the turbine causes the turbine blades to pivot about their mountings and lift the mass along the central axis.

Preferably, the speed of rotation is reduced as a result of the centre of gravity of the turbine blades moving away from the axis of rotation as they pivot about their mountings. Preferably, the speed of rotation is reduced as a result of the turbine blades moving out of the fluid flow as they pivot about their mountings.

Preferably, the turbine further comprises a shaft positioned along the central axis. Preferably, the mass is in the form of a collar positioned around the main shaft.

Preferably, the turbine further comprising a blade frame on which the turbine blades are mounted, spanning from the central axis. Preferably, each turbine blade comprises a substantially rectangular sheet with a curved profile. Preferably, each turbine blade has a concave face that is roughened or coated with a rough material. Preferably, each turbine blade has additional mass disposed towards its inner edge.

Preferably, the turbine is wind powered. Preferably, the turbine is used to generate electricity.

Specific embodiments of the invention will now be described by way of example with reference to the accompanying drawings in which:

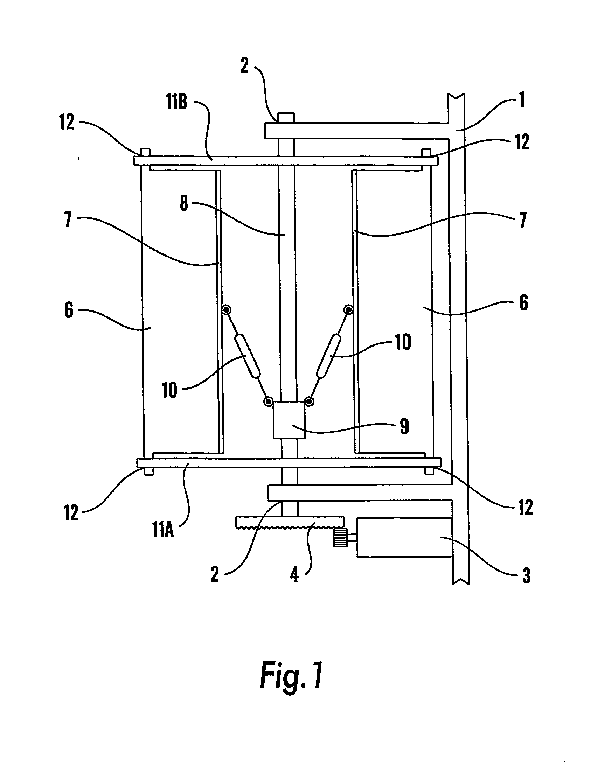

Figure 1 is a diagrammatic side view of a turbine with the blades nearest the viewer removed for clarity;
Figure 2 is a diagrammatic top view of the turbine;
Figure 3 is a diagrammatic view corresponding to Figure 1 when the turbine is rotating at high speed; and
Figure 4 is a diagrammatic view corresponding to Figure 2 when the turbine is rotating at high speed.

As shown in the Figures, an embodiment of the turbine includes a vertical main shaft 8, supported by a frame 1 via main bearings 2. The shaft 8 is rotatable about its axis. A lower blade support 11A, comprising a metal ring, is attached by a pair of radial arms to the main shaft 8 and a similar upper blade support 11B is attached higher up the main shaft 8. A plurality of turbine blades 6 are disposed between the lower blade support 11A and the upper blade support 11B. The embodiment shown has six turbine blades 6 but any number of blades 6 may be used according to design choice. Each blade comprises a substantially rectangular plate of metal with a curved profile. Each blade is pivotally mounted towards its outer periphery in a bearing 12 positioned towards the outer circumference of the lower blade support 11A and is supported in a substantially vertical position by a corresponding bearing 12 in the upper blade support 11B. Each blade 6 is therefore hinged and can pivot around its mountings between an orientation substantially around a circle centred on the main shaft 8 and an orientation substantially radial to the main shaft 8. Each turbine blade 6 has reinforcement in the form of a vertical strut 7 positioned along its inner edge. The mass of the vertical strut 7 serves to position the centre of gravity of each turbine blade 6 towards the centre of the turbine.

The turbine blades 6 are biased towards a substantially radial orientation by means of a mass 9, in the form of a collar around the vertical shaft 8. The mass 9 is free to move along the axis of the vertical shaft 8. Each turbine blade 6 is coupled to the mass 9 by a link 10 attached towards the inner periphery of the turbine blade 6. Couplings are provided at each end of each link 10 providing two degrees of freedom so as to enable movement of the mass 9 along the axis of the vertical shaft 8 and linked movement of the blades from a substantially circumferential orientation to a substantially radial orientation around the vertical shaft 8. The link 10 may be of fixed length and may include an adjusting means for appropriately adjusting the length of the link 10 prior to use. Alternatively, the link 10 may be in the form of a strong spring.

The turbine is connected via a gearing arrangement 4 to a generator/alternator 3 for generating electricity.

One skilled in the art will quickly conceive of many alternative arrangements that fall within the scope of the present invention. The central portion of the main shaft 8 may be omitted, such that the turbine is held together between the frame 1, with the lower frame support 11A and the upper frame support 11B being held apart by the turbine blades 6. The main shaft 8 might be rigidly fixed to the frame 1 with bearings allowing rotation of the blade supports around the shaft 8. Struts may be disposed between the frame supports towards their outer periphery and rigidly fixed thereto with the turbine blades 6 being attached to the struts by conventional hinges. The turbine blades 6 of the described embodiment have a shallow "C" shaped profile but an "S" shaped profile or any other profile suitable for catching the wind from one direction only may be used. Turbine blades 6 with a flat profile may also be used, preferably in conjunction with appropriate cowling to direct the wind to one side of the blades 6 only. The concave face of the turbine blades 6 may be roughened or coated with a rough material to help catch the wind.

In the absence of a central shaft 8, the mass 9 no longer need be in the shape of a collar, although it is considered advantageous to guide its movement along the central axis of the turbine.

The turbine has uses other than the generation of electricity, although this provides a convenient means for transmission of power. For example, it could be used to drive mechanical machinery directly.

In one embodiment, the turbine may include a braking system (not shown) to slow or stop the rotation of the turbine when desired. This may take the form or a conventional disk break disposed around the main shaft 8.

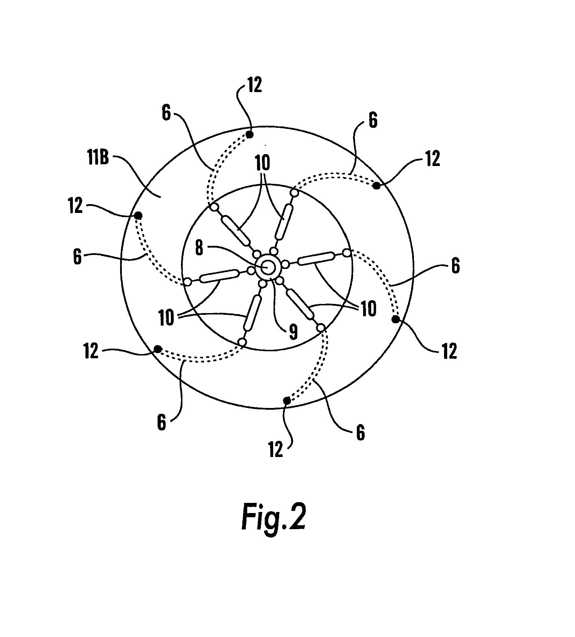

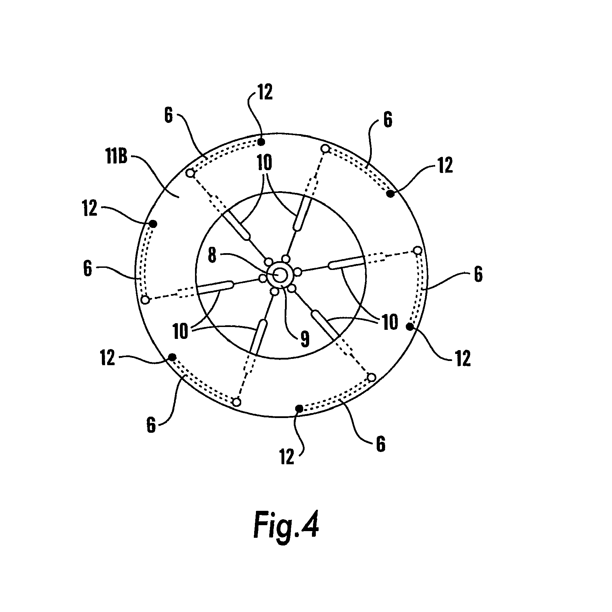

In use, the turbine is placed in a fluid flow, preferably an air-flow or wind. The turbine blades 6 are preferably shaped such that the direction of the wind is immaterial. Wind impacting a concave surface of the blade will generate a force on the turbine blade tending to push the blade in the direction that the wind is flowing. Wind impacting the convex surface of the turbine blades 6 on the opposite side of the turbine will generate a similar but smaller force. The result will be rotation of the turbine around its central axis. For example, the turbine shown in Figures 2 and 4 will rotate in an anti-clockwise direction. Clearly if the prevailing wind direction is known, appropriate cowling (not shown) can be provided to increase the wind impacting the concave surfaces of the turbine and decrease the wind impacting the convex surfaces.

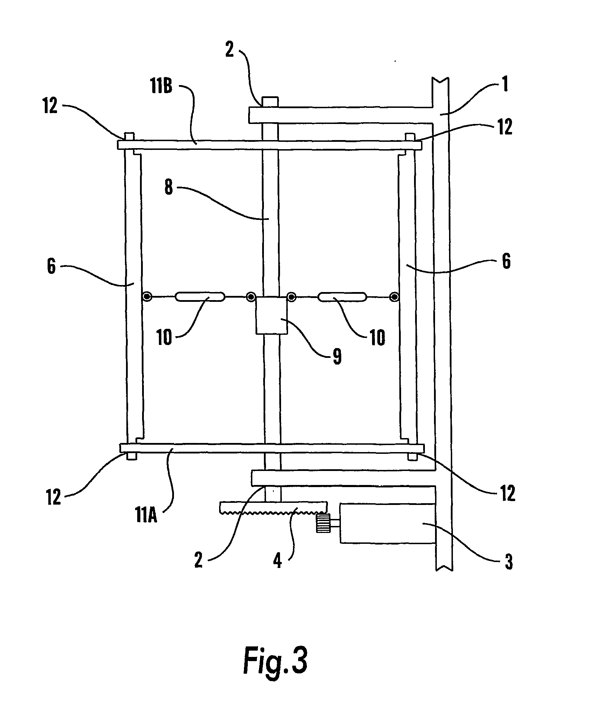

As the turbine rotates, the turbine blades tend to spin outwards as a result of the centrifugal forces acting on them and lift the mass 9 up the main shaft 8. This configuration is shown in Figures 3 and 4. The movement of the turbine blades 6 has two important effects. As the mass of the turbine blades 6 moves outwards, the speed of rotation of the turbine will tend to reduce in the same way that a governor on an engine maintains it speed, or a spinning ice skater slows down as she moves her centre of gravity radially outwards. Secondly, as the blades move to a more circumferential orientation, they catch less wind, thereby reducing the accelerating force provided to them by the wind. In the extreme, the turbine blades 6 move to a circumferential orientation completely out of the wind, thereby protecting the turbine from high winds or sudden gusts. The heavier the mass 9, the faster the turbine will spin and the larger the gust necessary to move the turbine blades 6 out of the wind.

Although this invention is described with reference to a wind-powered turbine, the principles described herein can be used in relation to turbines powered by other fluids, particularly water powered turbines.

One skilled in the art will readily conceive of many alternative embodiments of the invention described above. The present invention includes all such alternatives which fall within the scope of the following claims.

## Claims

1. A turbine comprising:
a plurality of turbine blades (6) arranged about a substantially vertical central axis such that they can rotate together about the central axis, each turbine blade (6) having an outer edge and an inner edge and being pivotally mounted near the outer edge about an axis substantially parallel to the central axis; and
biasing means (9, 10) which biases the inner edge of each turbine blade (6) towards the central axis, wherein:
when the turbine blades (6) are placed in a fluid flow they rotate together about the central axis and, as their speed of rotation increases, they pivot about their mountings (12) against the bias of the biasing means and into a more circumferential orientation about the central axis; and
the biasing means (9, 10) further comprises:
a mass (9) positioned substantially on the central axis and axially movable with respect thereto and connected with each turbine blade (6), **characterised in that**:
the turbine is adapted so that an increase in the speed of rotation of the turbine causes the turbine blades (6) to pivot about their mountings (12) and lift the mass (9) along the central axis.

2. A turbine according to claim 1, wherein the speed of rotation is reduced as a result of the centre of gravity of the turbine blades (6) moving away from the axis of rotation as they pivot about their mountings (12).

3. A turbine according to claim 1 or claim 2, wherein the speed of rotation is reduced as a result of the turbine blades (6) moving out of the fluid flow as they pivot about their mountings (12).

4. A turbine according to any one of claims 1 to 3, further comprising a shaft (8) positioned along the central axis.

5. A turbine according to claim 4, wherein the mass (9) is in the form of a collar positioned around the main shaft (8).

6. A turbine according to any one of claims 1 to 5, further comprising a blade frame (11A, 11B) on which the turbine blades (6) are mounted, spanning from the central axis.

7. A turbine according to any one of claims 1 to 6, wherein each turbine blade (6) comprises a substantially rectangular sheet with a curved profile.

8. A turbine according to any one of claims 1 to 7, wherein each turbine blade (6) has a concave face that is roughened or coated with a rough material.

9. A turbine according to any one of claims 1 to 8, wherein each turbine blade (6) has an additional mass disposed towards its inner edge.

10. A turbine according to claim 9, wherein the additional mass comprises a vertical strut (7) positioned along the inner edge of the turbine blade (6).

11. A turbine according to any one of claims 1 to 10, wherein each turbine blade (6) is connected with the mass (9) near the inner edge of the turbine blade (6).

12. A turbine according to claims 11, wherein each turbine blade (6) is coupled to the mass (9) by a link (10) attached towards the inner periphery of the turbine blade (6).

13. A turbine according to claim 12, wherein couplings providing two degrees of freedom are provided at each end of each link (10).

14. A turbine according to either claim 12 or claim 13, wherein the link (10) is in the form of a strong spring.

15. A turbine according to any one of claims 1 to 14, wherein the fluid flow is a wind.

16. A wind-powered electricity generator comprising:
a turbine as claimed in any one of claims 1 to 15; and
a generator to generate electricity when driven by the turbine blades.

## Patentansprüche

1. Turbine, umfassend
eine Mehrzahl von Turbinenblättern (6) angeordnet um eine im Wesentlichen vertikale zentrale Achse, sodass sie gemeinsam um die zentrale Achse umlaufen können, wobei jedes Turbinenblatt (6) eine Außenkante und einen Innenkante aufweist und im Bereich der Außenkante um eine zur zentralen Achse im Wesentlichen parallele Achse schwenkbar gelagert ist; und
Betätigungseinrichtungen zum Einwirken auf die Innenkante eines jeden Turbinenblattes (6) gegen die zentrale Achse, wobei
die Turbinenblätter (6) in einem Mediumstrom gemeinsam um die zentrale Achse umlaufen, und mit zunehmender Drehzahl um ihre Lager (12) entgegen der Kraft der Betätigungseinrichtung in eine stärkere Umfangsausrichtung um die Zentralachse verschwenkt werden; und
die Betätigungseinrichtung (9, 10) weiterhin umfasst:
eine Masse (9), die im Wesentlichen auf der Zentralachse angeordnet und in Bezug auf diese verschiebbar ist und die mit jedem Turbinenblatt (6) verbunden ist, **dadurch gekennzeichnet, dass** die Turbine derart gestaltet ist, dass ein Anstieg der Drehzahl der Turbine die Turbinenblätter (6) um ihre Lager (12) verschwenken und die Masse (9) entlang der Zentralachse anheben.

2. Turbine nach Anspruch 1, wobei die Drehzahl zufolge des Schwerezentrums der Turbinenblätter (6) verringert wird, die sich von der Drehachse beim Schwenken um ihre Lager (12) bewegen.

3. Turbine nach Anspruch 1 oder 2, wobei die Drehzahl verringert wird zufolge der Bewegung der Turbinenblätter (6) aus dem Mediumstrom beim Schwenken um ihre Lager (12).

4. Turbine nach einem der Ansprüche 1 bis 3, weiterhin umfassend eine Welle (8), die mit der zentralen Achse zusammenfällt.

5. Turbine nach Anspruch 4, wobei die Masse (9) den Gestalt eines Kragens aufweist, der die Hauptwelle (8) umgibt.

6. Turbine nach einem der Ansprüche 1 bis 5, weiterhin umfassend einen Blattrahmen (11A, 11B), an welchem die Turbinenblätter (6) montiert sind, und der sich von der Zentralachse aus erstreckt.

7. Turbine nach einem der Ansprüche 1 bis 6, wobei jedes Turbinenblatt (6) ein im Wesentlichen rechteckiges Blatt mit einem gekrümmten Profil aufweist.

8. Turbine nach einem der Ansprüche 1 bis 7, wobei jedes Turbinenblatt (6) eine konkave Fläche aufweist, die aufgeraut oder mit einem rauen Material beschichtet ist.

9. Turbine nach einem der Ansprüche 1 bis 8, wobei jedes Turbinenblatt (6) eine zusätzliche Masse aufweist, die gegen die Innenkante angeordnet ist.

10. Turbine nach Anspruch 9, wobei die zusätzliche Masse eine vertikale Strebe (7) umfasst, die entlang der Innenkante des Turbinenblattes (6) angeordnet ist.

11. Turbine nach einem der Ansprüche 1 bis 10, wobei jedes Turbinenblatt (6) mit der Masse (9) im Bereich der Innenkante des Turbinenblattes (6) verbunden ist.

12. Turbine nach Anspruch 11, wobei jedes Turbinenblatt (6) an die Masse (9) mittels eines Lenkers (10) angeschlossen ist, der seinerseits am Innenumfang des Turbinenblattes (6) befestigt ist.

13. Turbine nach Anspruch 12, wobei Kupplungen vorgesehen sind, die zwei Freiheitsgrade erlauben und die an jedem Ende eines jeden Lenkers (10) angeordnet sind.

14. Turbine nach Anspruch 12 oder 13, wobei der Lenker (10) die Gestalt einer starken Feder aufweist.

15. Turbine nach einem der Ansprüche 1 bis 14, wobei der Mediumstrom Wind ist.

16. Windgetriebener elektrischer Generator, umfassend:
eine Turbine gemäß einem der Ansprüche 1 bis 15; und
einen Generator zum Erzeugen elektrischer Energie beim Antreiben der Turbinenblätter.

## Revendications

1. Turbine comprenant :
une pluralité d'aubes de turbine (6) agencées autour d'un axe central sensiblement vertical de telle sorte qu'elles puissent tourner ensemble autour de l'axe central, chaque aube de turbine (6) comportant une arête extérieure et une arête intérieure et étant montée de façon pivotante près de l'arête extérieure autour d'un axe sensiblement parallèle à l'axe central, et
un moyen de sollicitation (9, 10) qui sollicite l'arête intérieure de chaque aube de turbine (6) vers l'axe central, dans laquelle :
lorsque les aubes de turbine (6) sont placées dans un écoulement de fluide, elles tournent ensemble autour de l'axe central et, à mesure que leur vitesse de rotation augmente, elles pivotent autour de leurs organes de montage (12) en s'opposant à la sollicitation du moyen de sollicitation et dans une orientation plus circonférentielle autour de l'axe central, et
le moyen de sollicitation (9, 10) comprend en outre :
une masse (9) positionnée sensiblement sur l'axe central et axialement mobile par rapport à celui-ci et reliée à chaque aube de turbine (6), **caractérisée en ce que** :
la turbine est conçue de telle sorte qu'une augmentation de la vitesse de rotation de la turbine amène les aubes de turbine (6) à pivoter autour de leurs organes de montage (12) et à soulever la masse (9) le long de l'axe central.

2. Turbine selon la revendication 1, dans laquelle la vitesse de rotation est réduite en conséquence du fait que le centre de gravité des aubes de turbine (6) s'écarte de l'axe de rotation lorsqu'elles pivotent autour de leurs organes de montage (12).

3. Turbine selon la revendication 1 ou la revendication 2, dans laquelle la vitesse de rotation est réduite en conséquence du fait que les aubes de turbine (6) sortent de l'écoulement de fluide lorsqu'elles pivotent autour de leurs organes de montage (12).

4. Turbine selon l'une quelconque des revendications 1 à 3, comprenant en outre un arbre (8) positionné le long de l'axe central.

5. Turbine selon la revendication 4, dans laquelle la masse (9) se présente sous la forme d'un collier positionné autour de l'arbre principal (8).

6. Turbine selon l'une quelconque des revendications 1 à 5 comprenant en outre une structure d'aube (11A, 11B) sur laquelle les aubes de turbine (6) sont montées, et qui s'étend à partir de l'axe central.

7. Turbine selon l'une quelconque des revendications 1 à 6, dans laquelle chaque aube de turbine (6) est constituée d'une tôle sensiblement rectangulaire présentant un profil courbé.

8. Turbine selon l'une quelconque des revendications 1 à 7, dans laquelle chaque aube de turbine (6) présente une face concave qui est rendue rugueuse ou recouverte d'un matériau rugueux.

9. Turbine selon l'une quelconque des revendications 1 à 8, dans laquelle chaque aube de turbine (6) comporte une masse supplémentaire disposée vers son arête intérieure.

10. Turbine selon la revendication 9, dans laquelle la masse supplémentaire est constituée d'une entretoise verticale (7) positionnée le long de l'arête intérieure de l'aube de turbine (6).

11. Turbine selon l'une quelconque des revendications 1 à 10, dans laquelle chaque aube de turbine (6) est reliée à la masse (9) près de l'arête intérieure de l'aube de turbine (6).

12. Turbine selon la revendication 11, dans laquelle chaque aube de turbine (6) est reliée à la masse (9) par un élément de liaison (10) fixé vers la périphérie intérieure de l'aube de turbine (6).

13. Turbine selon la revendication 12, dans laquelle des éléments d'accouplement offrant 2 degrés de liberté sont prévus à chaque extrémité de chaque élément de liaison (10).

14. Turbine selon l'une des revendications 12 ou 13, dans laquelle l'élément de liaison (10) se présente sous la forme d'un ressort résistant.

15. Turbine selon l'une quelconque des revendications 1 à 14, dans laquelle l'écoulement de fluide est un vent.

16. Générateur d'électricité alimenté par le vent comprenant :
une turbine selon l'une quelconque des revendications 1 à 15 et
un générateur destiné à générer de l'électricité lorsqu'il est entraîné par les aubes de la turbine.
